(19) Europäisches Patentamt / European Patent Office / Office européen des brevets

(11) **EP 3 342 803 A1**

(12) **EUROPEAN PATENT APPLICATION**
published in accordance with Art. 153(4) EPC

(43) Date of publication:
04.07.2018 Bulletin 2018/27

(51) Int Cl.:
*C08J 5/04* (2006.01)          *B29C 43/20* (2006.01)
*B29C 70/06* (2006.01)        *C08G 69/26* (2006.01)
*C08K 7/04* (2006.01)          *C08L 77/06* (2006.01)
*B29K 77/00* (2006.01)        *B29K 105/08* (2006.01)

(21) Application number: 16839093.8

(22) Date of filing: 10.08.2016

(86) International application number:
PCT/JP2016/073521

(87) International publication number:
WO 2017/033746 (02.03.2017 Gazette 2017/09)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 27.08.2015 JP 2015167560

(71) Applicant: Mitsubishi Gas Chemical Company, Inc.
Tokyo 100-8324 (JP)

(72) Inventors:
• MATSUMOTO Nobuhiko
Hiratsuka-shi
Kanagawa 254-0016 (JP)
• TSUNAKA Nobuhide
Hiratsuka-shi
Kanagawa 254-0016 (JP)

(74) Representative: Vossius & Partner
Patentanwälte Rechtsanwälte mbB
Siebertstrasse 3
81675 München (DE)

(54) **FILAMENT-REINFORCED COMPOSITE MATERIAL AND MOLDED ARTICLE**

(57) Provided is a continuous fiber-reinforced composite material with an excellent solvent resistance, and a molded article made of such material. The continuous fiber-reinforced composite material comprises a polyamide resin impregnated into continuous fibers; wherein the polyamide resin is composed of a structural unit derived from diamine and a structural unit derived from dicarboxylic acid; 50% by mole or more of the structural unit derived from diamine is derived from 1,3-bis(aminomethyl)cyclohexane; and 30% by mole or more of the structural unit derived from dicarboxylic acid is derived from isophthalic acid.

EP 3 342 803 A1

**Description**

TECHNICAL FIELD

This invention relates to a continuous fiber-reinforced composite material and a molded article, and in particular to a continuous fiber-reinforced composite material and a molded article using an amorphous polyamide resin.

BACKGROUND ART

Fiber reinforced plastics, which is a resin reinforced by blending fiber, have been widely investigated. Among them, continuous fiber-reinforced composite materials using continuous fibers have widely been investigated by virtue of their high mechanical strength. In addition, sheet-like or tape-like materials composed of fiber pre-impregnated with resin have attracted public attention, as an intermediate material for resin molded articles. As a specific example, Patent Literature 1 discloses a fiber-reinforced base below:

a fiber-reinforced base comprising:

a cloth at least in one form selected from the group consisting of woven fabric, knitted fabric and paralleled yarn sheet-like article, which are made of reinforcing fiber; and
a non-woven fabric that is composed of a thermoplastic resin fiber, and is stacked to the cloth,

the fiber-reinforced base satisfying all of the conditions below:

(1) the thermoplastic resin having a glass transition temperature of 100°C or higher;
(2) the thermoplastic resin having a melt flow rate (MFR) of, when in the form of crystalline resin, 20 to 80 g/10 min at a temperature 30°C higher than the melting temperature, and, when in the form of amorphous resin, 20 to 80 g/10 min at a temperature 120°C higher than the glass transition temperature.

There has also been investigated a continuous fiber-reinforced composite material using polyamide resins that have, among thermoplastic resins, high strength and toughness, and has excellent durability, heat resistance, and chemical resistance. Most of polyamide resins are however crystalline resin, so that molding thereof needs consideration on the crystallization speed. Particularly in some cases, its slow molding cycle in the process casts an issue for some cases . A possible way to improve the molding cycle is to use so-called amorphous polyamide resin which crystallizes very slowly or does not crystallize. For example, the Patent Literature 2 describes use of an amorphous polyamide resin called "Grilamid" (trade name).

CITATION LIST

PATENT LITERATURES

[Patent Literature 1] JP-A-2015-093984
[Patent Literature 2] JP-A-2008-274288

SUMMARY OF THE INVENTION

TECHNICAL PROBLEM

As described above, Grilamid is exempt from such issue of molding cycle since it is an amorphous polyamide resin. It has, however, been revealed that continuous fiber-reinforced composite materials using Grilamid are poor in terms solvent resistance. Particularly in recent years, the continuous fiber-reinforced composite materials are coated by coating material on the surface of the continuous fiber-reinforced composite materials. In such a case, many of the coating material contain a solvent.

It is therefore an object of this invention to solve this problem, and to provide a continuous fiber-reinforced composite material in which a polyamide resin is impregnated into continuous fibers, with an excellent solvent resistance, and a molded article made of such material.

SOLUTION TO PROBLEM

Considering the situation, the present inventors found after examinations that the problems described above can be solved by employing a polyamide resin component for a continuous fiber-reinforced composite material, the polyamide resin component being composed of a structural unit derived from diamine and a structural unit derived from dicarboxylic acid, wherein 50 to 100% by mole of the structural unit derived from diamine being derived from 1,3-bis (aminomethyl) cyclohexane, and 30 to 100% by mole of the structural unit derived from dicarboxylic acid being derived from isophthalic acid.

More specifically, the problems above were solved by the means <1> below, and preferably by means <2> to <11> below.

<1> A continuous fiber-reinforced composite material comprising a polyamide resin impregnated into continuous fibers; wherein the polyamide resin is composed of a structural unit derived from diamine and a structural unit derived from dicarboxylic acid; 50% by mole or more of the structural unit derived from diamine is derived from 1,3-bis(aminomethyl)cyclohexane; and 30% by mole or more of the structural unit derived from dicarboxylic acid is derived from isophthalic acid.

<2> The continuous fiber-reinforced composite material of <1>, wherein 30 to 80% by mole of the structural unit derived from dicarboxylic acid is derived from isophthalic acid, and 70 to 20% by mole is derived from straight chain $\alpha,\omega$-dicarboxylic acid having 4 to 12 carbon atoms.

<3> The continuous fiber-reinforced composite material of <2>, wherein the straight chain $\alpha,\omega$-carboxylic acid having 4 to 12 carbon atoms is at least either one of adipic acid and sebacic acid.

<4> The continuous fiber-reinforced composite material of <2>, wherein the straight chain $\alpha,\omega$-carboxylic acid having 4 to 12 carbon atoms is sebacic acid.

<5> The continuous fiber-reinforced composite material of any one of <1> to <4>, wherein 70% by mole or more of the structural unit derived from diamine is derived from
1,3-bis (aminomethyl)cyclohexane.

<6> The continuous fiber-reinforced composite material of any one of <1> to <5>, wherein the polyamide resin is amorphous.

<7> The continuous fiber-reinforced composite material of any one of <1> to <6>, wherein the polyamide resin has a molar ratio of reacted diamine relative to reacted dicarboxylic acid (number of moles of reacted diamine/number of moles of reacted dicarboxylic acid) of smaller than 1.0.

<8> The continuous fiber-reinforced composite material of any one of <1> to <7>, wherein the polyamide resin has a glass transition temperature of 100°C or higher.

<9> The continuous fiber-reinforced composite material of any one of <1> to <8>, wherein the continuous fiber is at least either one of carbon fiber and glass fiber.

<10> The continuous fiber-reinforced composite material of any one of <1> to <9>, wherein the continuous fiber has a sheet form.

<11> A molded article obtained by molding the continuous fiber-reinforced composite material described in any one of <1> to <10>.

ADVANTAGEOUS EFFECTS OF INVENTION

According to this invention, it now became possible to provide a continuous fiber-reinforced composite material that includes an amorphous polyamide resin impregnated into continuous fibers, with an excellent solvent resistance, and a molded article composed of the same.

DESCRIPTION OF EMBODIMENTS

This invention will be detailed below. Note that all numerical ranges in this specification given using "to", placed between numerals, mean the ranges containing both numerals as the lower and upper limit values.

The continuous fiber-reinforced composite material of this invention is a continuous fiber-reinforced composite material that contains a polyamide resin impregnated into continuous fibers, characterized in that the polyamide resin is composed of a structural unit derived from diamine and a structural unit derived from dicarboxylic acid, 50% by mole or more of the structural unit derived from diamine is derived from 1,3-bis(aminomethyl)cyclohexane, and 30% by mole or more of the structural unit derived from dicarboxylic acid is derived from isophthalic acid. With such configuration, the polyamide resin becomes more easily be impregnated into the continuous fibers. In addition, since the polyamide resin is usually amorphous polyamide resins, so that the obtainable continuous fiber-reinforced composite material will have an excellent molding cycle. In addition, since such continuous fiber-reinforced composite material has an excellent solvent resistance, the molded article made of such continuous fiber-reinforced composite material is less likely to be damaged even if coating material is coated on the surface thereof. In particular in this invention, resistance against toluene will be good. Use of the amorphous resin is also beneficial to enhance smoothness and glossiness of the surface of the molded article.

Details of this invention will be explained below.

<Polyamide Resin>

The polyamide resin used in this invention is composed of a structural unit derived from diamine and a structural unit derived from dicarboxylic acid, wherein 50% by mole or more of the structural unit derived from diamine is derived from 1,3-bis(aminomethyl)cyclohexane, and 30% by mole or more of the structural unit derived from dicarboxylic acid is derived from isophthalic acid.

In the polyamide resin used in this invention, 50% by mole or more of the structural unit derived from diamine is derived from 1,3-bis(aminomethyl)cyclohexane. As for the structural unit derived from diamine, preferably 51% by mole or more, more preferably 60% by mole or more, yet more preferably 65% by mole or more, even more preferably 70% by mole or more, even more preferably 75% by mole or more, even more preferably 90% by mole or more, and particularly 95% by mole or more of it is derived from 1,3-bis(aminomethyl)cyclohexane.

The diamine other than 1,3-bis(aminomethyl)cyclohexane is exemplified by aliphatic diamines such as 1,4-bis(aminomethyl)cyclohexane, tetramethylenediamine, pentamethylenediamine, hexamethylenediamine, octamethylenediamine, and nonamethylenediamine; and aromatic diamines such as paraphenylenediamine, metaxylylenediamine, and paraxylylenediamine. Only a single species, or two or more species of these diamines may be used.

In this invention, when the polyamide resin contains a structural unit derived from diamine other than 1,3-bis(aminomethyl)cyclohexane, as the structural unit derived from diamine, it preferably contains 1,4-bis(aminomethyl)cyclohexane. That is, one preferred embodiment of the polyamide resin used in this invention is exemplified by a polyamide resin in which 50 to 100% by mole (preferably 60 to 100% by mole, more preferably 70 to 100% by mole) of the structural unit derived from diamine is derived from 1,3-bis(aminomethyl)cyclohexane; and 0 to 50% by mole (preferably 0 to 40% by mole, more preferably 0 to 30% by mole) is derived from 1,4-bis(aminomethyl)cyclohexane. In the embodiment, also exemplified is a mode in which 90% by mole or more (preferably 95% by mole or more) of the structural unit derived from diamine is derived from 1,3-bis(aminomethyl)cyclohexane or 1,4-bis(aminomethyl)cyclohexane.

1,3-Bis(aminomethyl)cyclohexane, which is a source diamine of the polyamide resin, is available in cis-form and trans-forms. In this invention, the molar ratio of the isomers (cis/trans) is preferably 100/0 to 50/50, more preferably 90/10 to 60/40, and yet more preferably 80/20 to 70/30.

1,4-Bis(aminomethyl)cyclohexane, which is a source diamine of the polyamide resin, is available in cis-form and trans-form. In this invention, the molar ratio of the isomers (cis/trans) is preferably 100/0 to 60/40, and more preferably 90/10 to 70/30.

In the polyamide resin used in this invention, 30% by mole or more of the structural unit derived from dicarboxylic acid is derived from isophthalic acid. The lower limit of the ratio of the structural unit derived from isophthalic acid, relative to the total dicarboxylic acids composing the structural unit derived from dicarboxylic acid, is more preferably 35% by mole or above, more preferably 40% by mole or above, and even more preferably 45% by mole or above. The upper limit of the ratio of the structural unit derived from isophthalic acid is preferably 80% by mole or less, more preferably 75% by mole or less, even more preferably 70% by mole or less, and yet more preferably 68% by mole or less. Within these ranges, the polyamide resin will be beneficial enough to have an improved translucency.

In this invention, another possible mode may be such as containing substantially no structural unit derived from terephthalic acid. With such configuration, the polyamide resin will have a high translucency and an excellent heat resistance and heat aging resistance. Such polyamide resin will also have a low melt viscosity, and a higher glass transition temperature (Tg). Now, the phrase stating " ... containing substantially no terephthalic acid-derived structural unit derived from terephthalic acid" typically means that terephthalic acid accounts for 10% by mole or less of the total dicarboxylic acids composing the structural unit derived from dicarboxylic acid, and is more preferably 5% by mole or less, even more preferably 3% by mole or less, and yet more preferably 1% by mole or less. The lower limit value may even be 0% by mole.

In the polyamide resin used in this invention, 10 to 70% by mole of the structural unit derived from dicarboxylic acid is preferably derived from the straight chain $\alpha,\omega$-carboxylic acid having 4 to 12 carbon atoms. The straight chain $\alpha,\omega$-aliphatic dicarboxylic acid having 4 to 12 carbon atoms is exemplified by aliphatic dicarboxylic acids such as succinic acid, glutaric acid, pimelic acid, suberic acid, azelaic acid, adipic acid, sebacic acid, undecanedioic acid, and dodecanedioic acid, among which a single species may be used, or two or more species may be used in combination. Among them, at least either one of adipic acid and sebacic acid is preferable, and sebacic acid is more preferable. By using sebacic acid, the water absorption may be reduced while keeping various performances.

The lower limit of the ratio of straight chain $\alpha,\omega$-aliphatic structural unit derived from dicarboxylic acid having 4 to 12 carbon atoms, relative to the total dicarboxylic acids composing the structural unit derived from dicarboxylic acid, is more preferably 20% by mole or above, even more preferably 25% by mole or above, yet more preferably 30% by mole or above, and furthermore preferably 32% by mole or above. The upper limit is preferably 70% by mole or below, even more preferably 65% by mole or below, yet more preferably 60% by mole or below, and furthermore preferably 55% by mole or below. Within these ranges, the polyamide resin will be beneficial enough to improve the translucency more effectively.

One preferred embodiment of the polyamide resin used in this invention is typically such that 30 to 80% by mole of the structural unit derived from dicarboxylic acid is derived from isophthalic acid, and 70 to 20% by mole is derived from straight chain $\alpha,\omega$-carboxylic acid having 4 to 12 carbon atoms. Preferable ranges of the percentage by mole are same as those described above. In this embodiment, exemplified is a mode in which 90 to 100% by mole (preferably 95 to 100% by mole) of the structural unit derived from dicarboxylic acid is a structural unit derived from isophthalic acid or straight chain $\alpha,\omega$-carboxylic acid having 4 to 12 carbon atoms.

The dicarboxylic acid components other than those described above are exemplified by terephthalic acid such as orthophthalic acid; phthalic acid compounds other than isophthalic acid; and naphthalenedicarboxylic acids containing isomers such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid, among which a single species may be used, or two or more species may be used in combination.

Besides the structural unit derived from diamine and the structural unit derived from dicarboxylic acid, the polyamide resin used in this invention may contain, as a structural unit composing thereof, lactams such as $\varepsilon$-caprolactam and laurolactam; and structural unit derived from aliphatic amino carboxylic acid such as aminocaproic acid and aminoundecanoic acid, so long as the effect of this invention will not be adversely affected. In general, these other structural units may account for 5% by mole or less of the total structural units composing the polyamide resin.

The polyamide resin used in this invention may be manufactured by melt polycondensation (melt polymerization), with addition of a phosphorus-containing compound. The melt polycondensation is preferably a method by which a molten source dicarboxylic acid and a source diamine added dropwise thereto are heated under pressure, and the mixture is allowed to polymerize while removing the water released from condensation; or a method by which a salt composed of a source diamine and a source dicarboxylic acid is heated under the presence of water and under pressure, and the melt is allowed to polymerize while removing the added water and released water released from condensation.

The phosphorus-containing compound to be added to the polycondensation system for the polyamide resin used in this invention is exemplified by dimethylphosphinic acid, phenylmethylphosphinic acid, hypophosphoric acid, sodium hypophosphite, potassium hypophosphite, lithium hypophosphite, calcium hypophosphite, ethyl hypophosphite, phenylphosphinic acid, sodium phenylphosphinate, potassium phenylphosphinate, lithium phenylphosphinate, ethyl phenylphosphinate, phenylphosphonic acid, ethyl phosphonic acid, sodium phenylphosphonate, potassium phenylphosphonate, lithium phenylphosphonate, diethyl phenylphosphonate, sodium ethylphosphonate, potassium ethylphosphonate, phosphorous acid, sodium hypophosphite, sodium phosphite, triethyl phosphite, triphenyl phosphite, and pyrophosphorous acid. In particular, metal hypophosphites such as sodium hypophosphite, potassium hypophosphite, lithium hypophosphite, and calcium hypophosphite are preferably used since they can effectively accelerate the amidation reaction, and can effectively prevent coloration. Calcium hypophosphite is particularly preferable. The phosphorus-containing compounds applicable to this invention are not limited to these compounds.

The polyamide resin used in this invention obtained by the melt polycondensation is preferably taken out once, pelletized, and then used after dried.

The polyamide resin used in this invention preferably has a melt viscosity of 200 to 1200 Pa·s when measured at a shear rate of 122 sec$^{-1}$, 280°C, and a retention time of 6 minutes, more preferably 300 to 1000 Pa·s, may also be 400 to 900 Pa·s, and may particularly be 400 to 700 Pa·s. By reducing the melt viscosity to such low level, the impregnation ratio may further be improved.

<Measurement of Melt Viscosity>

The melt viscosity of the polyamide resin may be measured by using a capilograph, using an 1 mm diameter $\times$ 10 mm long die, at an apparent shear rate of 122 sec$^{-1}$, a measurement temperature of 280°C, a retention time of 6 minutes, and a water content of sample of 1000 ppm or below.

The polyamide resin used in this invention preferably has a number-average molecular weight of 8,000 to 25,000, more preferably 10,000 to 20,000, and also may be 10,000 to 19,000. The number-average molecular weight is measured according to the method described later in EXAMPLES. If the measuring instruments and so forth described in EXAMPLES have been discontinued, any instruments with equivalent performances may be employed. The same will apply also to other methods of measurement.

The polyamide resin used in this invention preferably has a weight-average molecular weight of 10,000 to 100,000, more preferably 20,000 to 80,000, and even more preferably 20,000 to 60,000. The weight-average molecular weight is measured according to the method described later in EXAMPLS.

The polyamide resin used in this invention has a glass transition temperature whose lower limit value is preferably 100°C or above, more preferably 120°C or above, and even more preferably 125°C or above. The upper limit value is preferably 190°C or below, more preferably 170°C or below, even more preferably 158°C or below, and yet more preferably 155°C or below.

With the glass transition temperature controlled to such lower limit value or above, the physical properties will be less likely to be degraded even under high temperatures. Meanwhile, with the glass transition temperature controlled to such upper limit value or below, moldability of the resultant continuous fiber-reinforced composite material will be improved. The glass transition temperature is measured according to the method described later in EXAMPLS.

The polyamide resin used in this invention preferably has a molar ratio of reacted diamine relative to reacted dicarboxylic acid (number of moles of reacted diamine/number of moles of reacted dicarboxylic acid) of smaller than 1.0. The polyamide resin used in this invention also preferably has a reactive functional group concentration (preferably, the total of terminal carboxy group concentration and terminal amino group concentration) of 100 $\mu$eq/g or higher, and a molar ratio of reaction of smaller than 1.0.

The reactive functional group concentration means the concentration ($\mu$eq/g) of a reactive group that resides at the terminals or on the principal chain or side chain of the polyamide resin, wherein the reactive group are represented by amino group and carboxy group. Considering the structure of source monomers, if the reactive functional group theoretically reside only at the polymer terminals, in some cases the concentration of the terminal reactive functional group may be substantially equal to the reactive functional group concentration of the polymer as a whole, which is preferable in this invention. The reactive functional group concentration is preferably 100 to 150 $\mu$eq/g, more preferably 105 to 140 $\mu$eq/g, and even more preferably 120 to 145 $\mu$eq/g. In this invention, the total concentration of the terminal amino group and the terminal carboxy group in the polyamide resin preferably falls in the above-described range of the reactive functional group concentration.

The polyamide resin used in this invention preferably has a molar ratio of reaction of smaller than 1.0. The molar ratio of reaction (r) is preferably 0.9999 or below, more preferably 0.9950 or below, and particularly 0.9899 or below, meanwhile the lower limit is typically 0.9800 or above, more preferably 0.9850 or above, and particularly 0.9860 or above.

Now the molar ratio of reaction (r) is determined referring to Kogyo Kagaku Zasshi (Journal of the Chemical Society of Japan, Industrial Chemical Section), Vol. 74, No. 7 (1971), p.162-167, using the equation below:

$$r = (1 - cN - b(C - N))/(1 - cC + a(C - N))$$

where,

    a: $M_1/2$
    b: $M_2/2$
    c: 18.015 (molecular weight of water (g/mol))
    $M_1$ : molecular weight of diamine (g/mol)
    $M_2$ : molecular weight of dicarboxylic acid (g/mol)
    N: amino group concentration (eq/g)
    C: carboxy group concentration (eq/g)

Note, for the case where the polyamide resin is synthesized using monomers with different molecular weights as the diamine components and the carboxylic acid components, $M_1$ and $M_2$ will of course be calculated according to the ratio of mixing (molar ratio) of the source monomers to be blended. If the inside of a reactor is a perfect closed system, the molar ratio of fed monomers and the molar ratio of reaction will agree. The actual reactor, however, cannot form a perfect closed system, so that the molar ratio of feeding and the molar ratio of reaction will not always agree. Also because the fed monomers will not always react completely, so that the molar ratio of feeding and the molar ratio of reaction again will not always agree. Accordingly, the molar ratio of reaction means the molar ratio of actually reacted monomers, determined based on the terminal group concentration of the resultant polyamide resin. N is preferably the terminal amino group concentration, and C is preferably the terminal carboxy group concentration.

The carboxy group concentration of the polyamide resin used in this invention (preferably, terminal carboxy group concentration, [COOH]) is preferably 70 $\mu$eq/g or above, more preferably 80 $\mu$eq/g, even more preferably 90 $\mu$eq/g, and yet more preferably 100 $\mu$eq/g or above. The upper limit is preferably 150 $\mu$eq/g or below, more preferably 130 $\mu$eq/g or below, and even more preferably 125 $\mu$eq/g or below.

The amino group concentration of the polyamide resin used in this invention (preferably, terminal amino group concentration, $[NH_2]$) is preferably 10 $\mu$eq/g or above, more preferably 11 $\mu$eq/g or above, even more preferably 12 $\mu$eq/g or above, and particularly 13 $\mu$eq/g or above. The upper limit is preferably 50 $\mu$eq/g or below, more preferably 40 $\mu$eq/g or below, even more preferably 30 $\mu$eq/g or below, particularly 20 $\mu$eq/g or lower, and yet more preferably 17 $\mu$eq/g or lower.

The amino group concentration and the carboxy group concentration are measured according to the methods described later in EXAMPLES. The reactive functional group concentrations of the polyamide resin may be adjustable by properly selecting conditions such as molar ratio of feeding of source dicarboxylic acid and diamine, reaction time, reaction temperature, drop rate of xylylenediamine, pressure in the reactor, start time of evacuation, structures of a partial condenser and a total condenser, types of packing material, and retention temperature.

The polyamide resin used in this invention is typically an amorphous polyamide resin. The amorphous polyamide resin is a resin showing no definite melting point, and more specifically, a resin having a melting enthalpy $\Delta$Hm of smaller than 5 J/g. By using the amorphous resin, the molding cycle may be improved. Crystallinity and amorphousness of the polyamide resin are measured according to the method described later in EXAMPLES.

The continuous fiber-reinforced composite material of this invention may contain only one species of polyamide resin, or may contain two or more species. The continuous fiber-reinforced composite material of this invention may be such that the polyamide resin, preliminarily blended with other components, is impregnated into the continuous fibers. The other components which may optionally be added include polyamide resins other than the polyamide resin used in this invention, thermoplastic resins other than polyamide resin, filler, matting agent, heat stabilizer, weathering stabilizer, UV absorber, plasticizer, flame retarder, antistatic agent, anti-coloring agent, and antigelling agent. Only a single species, or two or more species, of these additives may be used.

Specific examples of such other polyamide resins include polyamide 6, polyamide 66, polyamide 46, polyamide 6/66 (copolymer composed of polyamide 6 component and polyamide 66 component), polyamide 610, polyamide 612, polyamide 11, and polyamide 12. Only a single species, or two or more species of such other these polyamide resins may be used.

The thermoplastic resins other than the polyamide resin are exemplified by polyester resins such as polyethylene terephthalate, polybutylene terephthalate, polyethylene naphthalate, and polybutylene naphthalate. Only a single species, or two or more species, of the thermoplastic resins other than polyamide resin may be used.

<Continuous fiber>

The continuous fiber used in this invention is not specifically limited in terms of shape and so forth, and is good enough if it allows impregnation of the polyamide resin. The continuous fiber is a fiber length of 0.5 cm or longer, and preferably 1 m to 10000 m.

In this invention, the continuous fiber preferably accounts for 30% by volume or more of the continuous fiber-reinforced composite material, and more preferably for 35 to 60% by volume. The continuous fiber also preferably accounts for 38% by weight or more of the continuous fiber-reinforced composite material, and more preferably for 43 to 72% by weight.

The continuous fiber is exemplified by plant fiber, carbon fiber, glass fiber, alumina fiber, boron fiber, ceramic fiber, and aramid fiber, and is preferably at least one of carbon fiber and glass fiber. As the carbon fiber, preferably used is polyacrylonitrile-based carbon fiber, and pitch-based carbon fiber. Also carbon fibers originated from plant, such as lignin and cellulose may be used.

The continuous fiber used in this invention may treated with a surface treatment agent or sizing agent.

The surface treatment agent is exemplified by those composed of functional compounds such as epoxy-based compound, acrylic compound, isocyanate-based compound, silane-based compound, and titanate-based compound, wherein silane-based coupling agent, titanate-based coupling agent, and silane-based coupling agent are preferable.

The silane-based coupling agent is exemplified by trialkoxy- or triaryloxysilane compound such as aminopropyl triethoxysilane, phenylaminopropyl trimethoxysilane, glycidylpropyl triethoxysilane, methacryloxypropyl trimethoxysilane, vinyl triethoxysilane; ureidosilane; sulfidosilane; vinyl silane; and imidazolesilane.

Examples of the sizing agent include epoxy-based resins such as bisphenol A-type epoxy-based resin; bisphenol A-type vinyl ester resin which is an epoxy acrylate resin having acrylic group and methacrylic group in one ester resin molecule; novolac-type vinyl ester resin; and vinyl ester-based resins such as brominated vinyl ester resin. It may also be urethane-modified epoxy resin or vinyl ester-based resin.

As one embodiment of the continuous fiber, exemplified is sheet-like continuous fiber.

One example of the sheet-like continuous fiber may be continuous fibers opened from a continuous fiber roving. The continuous fiber roving in this invention is obtained by opening the continuous fiber roving and then aligning a plurality of continuous fibers in parallel in one direction, which are preferably aligned at regular intervals without a break. Size of the continuous fiber, denoted using the number of continuous fiber, is preferably 3000 to 60000, more preferably 6000 to 50000, and even more preferably 12000 to 24000.

Another example of the sheet-like continuous fiber may be such that the continuous fibers are distributed and aligned in one direction, or two or more directions to form a sheet. More specifically, a sheet having the continuous fibers randomly distributed in-plane just like in non-woven fabric, and a sheet having the continuous fibers regularly aligned like in woven fabric or knitted fabric, are exemplified.

The sheet, having the continuous fibers regularly aligned like in woven fabric or knitted fabric, preferably has a unit weight of 10 to 1000 $g/m^2$, more preferably 50 to 500 $g/m^2$, and even more preferably 80 to 400 $g/m^2$. The continuous fibers may be single-layered, or may have a laminated structure. For the sheet having the continuous fibers aligned in two or more directions, it suffices that the yarn at least in one direction, out of two directions, is such continuous fiber, meanwhile the yarn in the other direction is not necessary such continuous fiber. More specifically, for woven fabric, it suffices that one of the warp and weft is such continuous fiber, and the other is not necessarily such continuous fiber.

The sheet-like continuous fiber has preferably a thickness of 0.1 mm to 5 mm, and more preferably a thickness of 0.1 to 3 mm.

<Characteristic and Shape of Continuous Fiber-Reinforced Composite Material>

In the continuous fiber-reinforced composite material of this invention, at least a part of the polyamide resin is impregnated into the continuous fibers. The impregnation ratio into the continuous fiber-reinforced composite material of this invention is preferably 80% or above, more preferably 90% or above, and even more preferably 95% or above. The upper limit value is preferably 100%. The impregnation ratio in this invention is measured by the method described later in EXAMPLES.

Although shape of the continuous fiber-reinforced composite material is not specifically limited, tape and film are preferable. These shapes can allow material processing without chopping the reinforcing fiber, can maximize the performances of the reinforcing fiber, and can yield products with very high mechanical strength as compared with those made from the pellets only containing chopped reinforcing fiber. The continuous fiber-reinforced composite material of this invention is suitable as a prepreg.

The continuous fiber-reinforced composite of this invention, given in the shape of tape or film, preferably has a thickness of 100 $\mu$m to 10 mm or around.

<Method for manufacturing Continuous Fiber-Reinforced Composite Material>

Any of known methods is applicable to the method for manufacturing a continuous fiber-reinforced composite material of this invention, without special limitation. More specifically, the polyamide resin used in this invention, or, a composition containing the polyamide resin used in this invention, in a molten state may be impregnated into the continuous fibers.

"A composition containing the polyamide resin used in this invention" in this context means a composition obtained by blending the polyamide resin used in this invention, with the above-described other components that may be added to the polyamide resin.

For impregnation, the composition is used in the molten state. The composition may be impregnated into the continuous fibers after melted, or may be impregnated into the continuous fibers while it is melted.

The melting temperature is preferably in the range from Tg of the polyamide resin used in this invention up to Tg + 200°C.

The impregnation may be allowed to proceed under pressure, and is preferably under pressure. For example, a pressure of 1 to 5 MPa may be applied. The impregnation time depends on the thickness of the continuous fiber-reinforced composite material to be formed, and may be long. However, the shorter the better.

The impregnation process is preferably followed by cooling process.

As for other aspects of the method for manufacturing the continuous fiber-reinforced composite material of this invention, description in paragraphs [0055] to [0058] of JP-A-2015-93984, and description of JP-A-2015-039842 and so forth may be referred to, the contents of which are incorporated into this specification.

The continuous fiber-reinforced composite material obtained by the above-described manufacturing method may also be wound up onto a roll, and may be stored in the form of wound-up article.

<Molded Article>

This invention also discloses a molded article obtained by molding the continuous fiber-reinforced composite material of this invention. The molded article of this invention will have an excellent solvent resistance while keeping a necessary level of mechanical strength, and further will have a low water absorption.

The molded article is preferably obtained by subjecting the continuous fiber-reinforced composite material of this invention, which is in the form of single layer or multi-layer, to heat processing. In this invention, the molded article with arbitrary shapes may be obtained by press working. For example, unevenly-shaped molded articles may be obtained by press-working in unevenly-shaped dies.

The molded article of this invention is applicable to various molded articles including film, sheet, thin molded article, and hollow molded article. Applicable fields of the molded article include automobile parts and other transportation equipment parts, general machinery parts, precision equipment parts, electronic/electric equipment parts, office automation equipment parts, building material/housing equipment parts, medical device, leisure time/sport goods, playing tools, medical supplies, dairy goods including food wrapping film, and defense/aerospace products.

EXAMPLES

This invention will further be detailed below referring to Examples. Note that the materials, amount of consumption, ratios, process details, and process procedures described in Examples below may properly be modified, without departing from the spirit of this invention. The scope of this invention is therefore not limited by the specific examples described below.

Example 1

<Synthesis of 1,3-BAC10I-1>

In a 50-L pressure-proof reaction vessel equipped with a stirrer, a partial condenser, a total condenser, a pressure regulator, a thermometer, a dropping tank, a pump, an aspirator, a nitrogen introducing tube, a bottom drain valve, and a strand die, placed were precisely weighed 7000 g (34.61 mol) of sebacic acid (denoted as "SA" in Table below, from Itoh Oil Chemicals Co., Ltd.), 5750 g (34.61 mol) of isophthalic acid (denoted as "I" in Table below, from A.G. International Chemical Co., Inc.), 3.3 g (0.019 mol) of calcium hypophosphite (from Kanto Chemical Co., Inc.), and 1.4 g (0.018 mol) of sodium acetate (from Kanto Chemical Co., Inc.), the vessel was thoroughly nitrogen-purged, tightly closed, and the content was heated up to 200°C under stirring, while keeping the inside of vessel at 0.4 MPa. After reaching 200°C, dropwise addition of 9847 g (69.22 mol) of 1,3-bis(aminomethyl)cyclohexane (1,3-BAC, molar ratio of isomers: cis/trans = 75/25) (from Mitsubishi Gas Chemical Company, Inc.), stored in the dropping tank, into the source material in the reaction vessel was started, and the content of the reaction vessel was heated up to 295°C, while keeping the inside of the vessel at 0.4 MPa, and while removing water released from condensation. After completion of the dropwise addition of 1,3-BAC, the pressure inside the reaction vessel was gradually returned to the normal pressure, then the inside of the reaction vessel was evacuated using the aspirator down to 80 kPa, to thereby remove water released from condensation. Torque of the stirrer was observed during evacuation, the stirring was stopped upon reaching a predetermined torque, the inside of the reaction vessel was pressurized with nitrogen gas, the bottom drain valve was opened, the polymer was drawn out through the strand die to obtain strands, cooled, and pelletized using a pelletizer, to obtain a polyamide resin. The thus obtained will be referred to as "1,3-BAC10I-1".

<Terminal Group Concentration of Polyamide Resin>

Into a 4/1(v/v) phenol/ethanol mixed solvent, 0.3 g of the thus obtained polyamide resin was dissolved under stirring at 25°C, and after completely dissolved, the inner wall of the vessel was washed with 5 mL of methanol, and the terminal amino group concentration $[NH_2]$ was determined by neutralization titration with a 0.01 mol/L aqueous hydrochloric acid solution. Meanwhile, 0.3 g of polyamide resin was dissolved in benzyl alcohol under nitrogen gas flow and under stirring at 170°C, and after completely dissolved, cooled down to 80°C or below under nitrogen gas flow, the inner wall of the vessel was washed under stirring with 10 mL of methanol, and the terminal carboxy group concentration [COOH] was determined by neutralization titration with a 0.01 mol/L aqueous sodium hydroxide solution. These values of terminal group concentration were given in $\mu$eq/g.

<Number-Average Molecular Weight (Mn) and Weight-Average Molecular Weight (Mw) of Polyamide Resin>

The number-average molecular weight and the weight-average molecular weight were measured by gel permeation chromatography (GPC). More specifically, by using "HLC-8320GPC" from Tosoh Corporation as an instrument, two pieces of "TSKgel Super HM-H" as columns, a 10 mmol/L sodium trifluoroacetate solution in hexafluoroisopropanol (HFIP) as an eluant, and a refractive index detector (RI), measurement was carried out at a resin concentration of 0.02% by weight, a column temperature of 40°C, and a flow rate of 0.3 ml/min, to determine the molecular weights as standard polymethyl methacrylate-equivalent values. An analytical curve was prepared using six concentration levels of solution of polymethyl methacrylate (PMMA) dissolved into HFIP.

<Measurement of Glass Transition Temperature (Tg) of Polyamide Resin, Crystallinity, Amorphousness>

The glass transition temperature was measured using a differential scanning calorimeter (DSC), under a nitrogen gas flow, by heating the sample from room temperature up to 250°C at a heating rate of 10°C/min, followed by immediate cooling down below room temperature, and re-heating from room temperature up to 250°C at a heating rate of 10°C/min. In this Example, DSC-60 from Shimadzu Corporation was used as the differential scanning calorimeter. The unit is °C.
Also crystal melting enthalpy $\Delta Hm(X)$ of the polyamide resin in the process of heating was measured in compliance with JIS K7121. The samples having a crystal melting enthalpy $\Delta Hm$ of smaller than 5 J/g were determined as amorphous resins.

<Molar Ratio of Reaction of Polyamide Resin>

The molar ratio of reaction was determined from the above-described equation below:

$$r = (1 - cN - b(C - N))/(1 - cC + a(C - N))$$

where,

a: $M_1/2$
b: $M_2/2$
c: 18.015
$M_1$: molecular weight of diamine (g/mol)
$M_2$: molecular weight of dicarboxylic acid (g/mol)
N: amino group concentration (eq/g)
C: carboxy group concentration (eq/g)

<Manufacture of Polyamide Resin Film>

The polyamide resin dried in a vacuum dryer was melt-extruded from a single screw extruder with a 30-mm-diameter screw, and extrusion-molded through a T-die of 500 mm wide, the obtained film was then embossed on the surface thereof with a pair of stainless steel rolls having embossed surfaces, at a roll temperature of 70°C and under a roll pressure of 0.4 MPa.
The thus obtained polyamide resin film (1) was found to have an average thickness of 100 $\mu$m.

<Manufacture of Continuous Fiber-Reinforced Composite Material>

The polyamide resin film (1) and carbon continuous fiber (TR3110M, from Mitsubishi Rayon Co., Ltd., unit weight = 200 g/m$^2$, thickness per sheet = 1 mm), 17 sheets in total, were alternately stacked, cut into 200 mm long pieces, and placed on a lower die (size: 200 × 200 (mm)) of a press machine (380-mm-square, 65-ton press molding machine, from Otake Machinery Industry Co., Ltd.). An upper die was set, and the piece was hot pressed under a pressure of 3 MPa, at 280°C for 20 minutes, and then cooled to 100°C or below while being kept under pressure, to obtain a continuous fiber-reinforced composite material.
The thus obtained continuous fiber-reinforced composite material was found to have a thickness of 2 mm. The ratio by volume of the continuous fiber in the continuous fiber-reinforced composite material was found to be 50%.

<Measurement of Impregnation Ratio>

The thus-obtained continuous fiber-reinforced composite material was embedded into an epoxy resin, the thus embedded FPR was polished on a cross-section in the longitudinal direction, and the cross-section was photographed using a ultra-depth color 3D profiling microscope "VK-9500" (controller unit)/VK-9510 (measurement unit) (from Keyence Corporation). From the thus obtained cross-sectional image, areas of the continuous fiber having the polyamide resin impregnated therein were selected using image analyzing software "ImageJ", and the area was measured. The impregnation ratio was represented by (area where polyamide resin is impregnated into continuous fibers seen in photographed cross-section)/(photographed cross-sectional area) × 100 (in %).

<Water absorption>

Water absorption was measured using the continuous fiber-reinforced composite material obtained above as a test specimen, after immersing it into water at 23°C for 30 days. The water absorption was calculated based on the ratio by weight of the pre-immersed specimen and immersed specimen. Evaluation was made as below:

Rank A: below 1.5% (practical level)
Rank B: 1.5% or above, below 4.0% (practical level)
Rank C: 4.0% or above (unpractical level)

<Elastic Modulus>

Flexural elastic modulus was measured using the continuous fiber-reinforced composite material obtained above as a test specimen, in compliance with JIS K7171. The unit is GPa.

<Solvent Resistance>

Solvent resistance was measured using the continuous fiber-reinforced composite material obtained above as a test specimen, after immersed into toluene at 60°C. Evaluation was made as below:

Rank A: no change after one-day immersion at 60°C (practical level)
Rank B: surface at least partially turned up after 12-hour immersion at 60°C (unpractical level)
Rank C: surface at least partially turned up after immersion not exceeding 12 hours at 60°C (unpractical level)

<Manufacture of Molded Article>

Ten sheets of the continuous fiber-reinforced composite material obtained above were stacked, and pressed at 280°C under a pressure of 4 MPa for 5 minutes . A block-like molded article having a thickness of 20 mm was obtained.

Example 2

<Synthesis of 1,3-BAC10I-2>

A polyamide resin was obtained in the same way as in Example 1, except that the molar ratio of sebacic acid and isophthalic acid was changed to 36:64. The thus obtained polyamide resin will be referred to as "1,3-BAC10I-2".

<Various Performance Evaluations>

Various performance evaluations were carried out in the same way as in Example 1, except that the type of polyamide resin was changed to 1,3-BAC10I-2.

Example 3

<Various Performance Evaluations>

Various performance evaluations were carried out in the same way as in Example 1, except that the carbon fiber was replaced by glass continuous fiber (KS1210 1080S-935N from Nitto Boseki Co., Ltd., 90 g/m², thickness per sheet = 0.08 mm).

Example 4

<Synthesis of 1,3-BAC6I>

A polyamide resin was obtained in the same way as in Example 1, except that, in place of sebacic acid, an equimolar of adipic acid (denoted as "AA" in Table below, from Rhodia) was used, and the highest reachable temperature was set to 280°C.
The thus obtained polyamide resin will be referred to as "1,3-BAC6I".

<Various Performance Evaluation>

Various performance evaluations were carried out in the same way as in Example 1, except that the type of polyamide resin was changed to 1,3-BAC6I.

Example 5

<Syntheses of 1,3-BAC/1,4-BAC10I>

A polyamide resin was obtained in the same way as in Example 1, except that 1,3-bis(aminomethyl)cyclohexane was replaced with a 70:30 mixture, on the molar basis, of 1,3-BAC and 1,4-bis(aminomethyl)cyclohexane (1,4-BAC, cis/trans=60/40) (from Mitsubishi Gas Chemical Company, Inc.).
The thus obtained polyamide resin will be referred to as "1,3-BAC/1,4-BAC10I".

<Various Performance Evaluations>

Various performance evaluations were carried out in the same way as in Example 1, except that the type of polyamide resin was changed to 1,3-BAC/1,4-BAC10I.

Comparative Example 1

<Various Performance Evaluations>

Various performance evaluations were carried out in the same way as in Example 1, except that the type of polyamide resin was changed to Grilamid (TR-55, from EMS-Chemie, Ltd.).
Grilamid is a polyamide resin composed of polyamide 12, MACM(3,3'-dimethyl-4,4'-diaminocyclohexylmethane) and isophthalic acid.

[Table 1]

| | | Example 1 | Example 2 | Example 3 | Example 4 | Example 5 | Comparative Example1 |
|---|---|---|---|---|---|---|---|
| Polyamide resin | Abbreviation | 1,3-BAC10I-1 | 1,3-BAC10I-2 | 1,3-BAC10I-1 | 1,3-BAC6I | 1,3-BAC/ 1,4BAC10I | Grilamid |
| | Dicarboxylic acid | SA (50) | SA (36) | SA (50) | AA (50) | SA (50) | |
| | | I (50) | I (64) | I (50) | I (50) | I (50) | |
| | Diamine | 1,3-BAC (100) | 1,3-BAC (100) | 1,3-BAC (100) | 1,3-BAC (100) | 1,3-BAC (70) | |
| | | | | | | 1,4-BAC (30) | |
| | Number-average molecular weight | 13400 | 11700 | 13400 | 16800 | 17400 | 7600 |
| | Weight-average molecular weight | 30500 | 30500 | 30500 | 39600 | 41800 | 19200 |
| | Tg(glass transition point) | 132 | 150 | 132 | 148 | 135 | 161 |
| | Molar ratio of reaction | 0.9867 | 0.9872 | 0.9867 | 0.9937 | 0.9868 | - |
| | Terminal COOH group | 119.2 | 119.0 | 119.2 | 83.3 | 118.1 | 87.1 |
| | Terminal NH$_2$ group | 13.7 | 15.8 | 13.7 | 35.4 | 13.5 | 36.4 |
| | Crystalline- Amorphous | Amorphous | Amorphous | Amorphous | Amorphous | Amorphous | Amorphous |
| Reinforcing fiber | | Carbon fiber | Carbon fiber | Glass fiber | Carbon fiber | Carbon fiber | Carbon fiber |
| Impregnation Ratio | | 97 | 95 | 99 | 99 | 82 | 78 |
| Performances of molded article | Water absorption | A | A | A | B | A | A |
| | Elastic Modulus | 51 | 47 | 32 | 52 | 42 | 35 |
| | Solvent Resistance | A | A | A | A | A | C |

As is clear from the results above, the continuous fiber-reinforced composite materials of Examples 1 to 5 were found to have high impregnation ratio, low water absorption, and excellent solvent resistance. In relation to the elastic modulus, it was found that intrinsic performances of the reinforcing fiber to be blended and the polyamide resin were demonstrated without being inhibited. By adding sebacic acid, as a dicarboxylic acid component composing the polyamide resin, in addition to isophthalic acid, the continuous fiber-reinforced composite materials were found to be excellent also in terms of water absorption.

In contrast, Comparative Example 1 using Grilamid as the polyamide resin was found to have an impregnation ratio of smaller than 80%, demonstrating an extremely poor solvent resistance.

**Claims**

1. A continuous fiber-reinforced composite material comprising a polyamide resin impregnated into continuous fibers; wherein the polyamide resin is composed of a structural unit derived from diamine and a structural unit derived from dicarboxylic acid;

   50% by mole or more of the structural unit derived from diamine is derived from 1,3-bis(aminomethyl)cyclohexane; and
   30% by mole or more of the structural unit derived from dicarboxylic acid is derived from isophthalic acid.

2. The continuous fiber-reinforced composite material of Claim 1, wherein 30 to 80% by mole of the structural unit derived from dicarboxylic acid is derived from isophthalic acid, and 70 to 20% by mole is derived from straight chain $\alpha,\omega$-dicarboxylic acid having 4 to 12 carbon atoms.

3. The continuous fiber-reinforced composite material of Claim 2, wherein the straight chain $\alpha,\omega$-carboxylic acid having 4 to 12 carbon atoms is at least either one of adipic acid and sebacic acid.

4. The continuous fiber-reinforced composite material of Claim 2, wherein the straight chain $\alpha,\omega$-carboxylic acid having 4 to 12 carbon atoms is sebacic acid.

5. The continuous fiber-reinforced composite material of any one of Claims 1 to 4, wherein 70% by mole or more of the structural unit derived from diamine is derived from 1,3-bis(aminomethyl)cyclohexane.

6. The continuous fiber-reinforced composite material of any one of Claims 1 to 5, wherein the polyamide resin is amorphous.

7. The continuous fiber-reinforced composite material of any one of Claims 1 to 6, wherein the polyamide resin has a molar ratio of reacted diamine relative to reacted dicarboxylic acid (number of moles of reacted diamine/number of moles of reacted dicarboxylic acid) of smaller than 1.0.

8. The continuous fiber-reinforced composite material of any one of Claims 1 to 7, wherein the polyamide resin has a glass transition temperature of 100°C or higher.

9. The continuous fiber-reinforced composite material of any one of Claims 1 to 8, wherein the continuous fiber is at least either one of carbon fiber and glass fiber.

10. The continuous fiber-reinforced composite material of any one of Claims 1 to 9, wherein the continuous fiber has a sheet form.

11. A molded article obtained by molding the continuous fiber-reinforced composite material described in any one of Claims 1 to 10.

## INTERNATIONAL SEARCH REPORT

| | International application No. |
|---|---|
| | PCT/JP2016/073521 |

A. CLASSIFICATION OF SUBJECT MATTER
*C08J5/04*(2006.01)i, *B29C43/20*(2006.01)i, *B29C70/06*(2006.01)i, *C08G69/26* (2006.01)i, *C08K7/04*(2006.01)i, *C08L77/06*(2006.01)i, *B29K77/00*(2006.01)n, *B29K105/08*(2006.01)n

According to International Patent Classification (IPC) or to both national classification and IPC

B. FIELDS SEARCHED

Minimum documentation searched (classification system followed by classification symbols)
C08J5/04, B29C43/20, B29C70/06, C08G69/26, C08K7/04, C08L77/06, B29K77/00, B29K105/08

Documentation searched other than minimum documentation to the extent that such documents are included in the fields searched
Jitsuyo Shinan Koho        1922-1996   Jitsuyo Shinan Toroku Koho   1996-2016
Kokai Jitsuyo Shinan Koho   1971-2016   Toroku Jitsuyo Shinan Koho   1994-2016

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2015-017178 A  (Mitsubishi Gas Chemical Co., Inc.), 29 January 2015 (29.01.2015), entire text & WO 2015/005201 A1      & EP 3020747 A1 & TW 201512303 A      & CN 105377947 A & KR 10-2016-0029016 A | 1-11 |
| A | JP 3-200871 A  (Mitsui Petrochemical Industries, Ltd.), 02 September 1991 (02.09.1991), entire text (Family: none) | 1-11 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 September 2016 (06.09.16) | 13 September 2016 (13.09.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

| International application No. |
|---|
| PCT/JP2016/073521 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2015-030555 A  (Mitsubishi Gas Chemical Co., Inc.),<br>16 February 2015 (16.02.2015),<br>entire text<br>(Family: none) | 1-11 |
| A | JP 2015-030119 A  (Mitsubishi Gas Chemical Co., Inc.),<br>16 February 2015 (16.02.2015),<br>entire text<br>(Family: none) | 1-11 |
| A | WO 2014/042068 A1  (Mitsubishi Engineering-Plastics Corp.),<br>20 March 2014 (20.03.2014),<br>entire text<br>& US 2015/0210835 A1    & CN 104583329 A<br>& KR 10-2015-0054764 A | 1-11 |
| A | WO 2014/171363 A1  (Toyobo Co., Ltd.),<br>23 October 2014 (23.10.2014),<br>entire text<br>(Family: none) | 1-11 |

Form PCT/ISA/210 (continuation of second sheet) (January 2015)

**EP 3 342 803 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015093984 A
- JP 2008274288 A
- JP 2015039842 A

**Non-patent literature cited in the description**

- *Kogyo Kagaku Zasshi (Journal of the Chemical Society of Japan, Industrial Chemical Section),* 1971, vol. 74 (7), 162-167